# EUROPEAN PATENT APPLICATION

(11) **EP 2 667 626 A1**
(43) Date of publication of application: **27.11.2013**
(21) Application number: 13165443.6
(22) Date of filing: 25.04.2013
(51) Int. Cl.: H04N 21/41, H04N 21/436, H04N 21/47, G06F 3/0488

(54) **METHOD FOR MANAGING MULTIMEDIA FILES, DIGITAL MEDIA CONTROLLER, AND SYSTEM FOR MANAGING MULTIMEDIA FILES**

(30) Priority: 22.05.2012 TW 101118197
(71) Applicant: Pegatron Corporation, Taipei City 112 (TW)
(72) Inventor: Wu, Jih-Wei, 112 TAIPEI CITY (TW); Chiu, Po-Jen, 112 TAIPEI CITY (TW)
(74) Representative: von Kreisler Selting Werner

(57) **Abstract**

A method for managing multimedia files adapted for a multimedia system architecture including a digital media controller, a digital media server and digital media renderers. The digital media server stores a plurality of multimedia files. The method including: displaying a server list on a touchscreen of the digital media controller to list the digital media servers in the multimedia system architecture, and to list the multimedia files stored in at least one of the digital media servers. A first input action is sensed via the touchscreen to select one of the multimedia files in the server list. The first input action is analyzed to play the selected multimedia file directly by the digital media renderer that is already connected with the digital media server storing the selected multimedia file, or by another digital media renderer, according to different first input actions.

## Description

### BACKGROUND

### Technology Field

The disclosure relates to a method, a system, and a controller for file management and, in particular, to a method for managing multimedia files, a digital media controller, and a system for managing multimedia files in a one-to-multiple manner.

### Related Art

DLNA (Digital Living Network Alliance) is an alliance organization consisting of companies selling consumer electronics, mobile phones, and computers. It defined unified transmission specifications for devices of different companies to be able to communicate with each other. Accordingly, multimedia devices can establish links, perform synchronized actions, or even transmit data directly as long as they conform to the DLNA specification.

DLNA devices are separated into four categories: DMS (Digital Media Server), DMP (Digital Media Player), DMC (Digital Media Controller), and DMR (Digital Media Renderer). Among those devices, a DMS is a device that obtains, records, stores and acts as the source of multimedia files. A DMP is a device that can search actively and play or output any multimedia file that is provided by a DMS. A DMC acts as a remote control device that can search the multimedia files on a DMS, designate the DMR capable of rendering the multimedia files to render them, and control the upload of the multimedia files to the DMS. A DMR can passively receive and play the multimedia file pushed from a DMC.

In a home network, any computer, mobile phone, server or player can share and play multimedia contents (such as videos, music or pictures) through the network as long as it conforms to the DLNA specification. Except for the source of the contents, a user can also select freely to play the multimedia file on any device that has playback capabilities. For example, a user can use the control computer in the kitchen to select the video in the computer in the study room and play it on the television screen in the living room. As a result, the convenience of a digital home to enjoy video and audio quickly and easily can be achieved.

### SUMMARY OF THE INVENTION

The disclosure provides a method for managing multimedia files for a user to operate and control the corresponding relationships between digital media servers and digital media controllers more intuitively.

The disclosure provides a digital media controller to reduce the complexity of one-to-many multimedia file management.

The disclosure provides a system for managing multimedia files that can improve the convenience of a user.

The embodiment of the invention provides a method for managing multimedia files adapted for a multimedia system architecture, wherein the multimedia system architecture includes a network, at least one digital media controller, a plurality of digital media servers and a plurality of digital media renderers, and each of the digital media servers stores a plurality of multimedia files, and the digital media controller is connected with the digital media servers and the digital media renderers via the network, the method comprising: displaying a server list on a touchscreen of the digital media controller to list the digital media servers in the multimedia system architecture, and to list the multimedia files stored in at least one of the digital media servers. A first input action is sensed at an input position of the touchscreen to select one of the multimedia files corresponding to the input position and stored in one of the digital media servers listed in the server list. The first input action is analyzed. When the first input action is a tap action, the selected multimedia file is played by the digital media renderer that is already connected with the digital media server corresponding to the selected multimedia file. When the first input action is a long press action, a renderer list is played on the touchscreen to list the digital media renderer in the multimedia system architecture. One of the digital media renderer is selected by sensing a second input action through the touchscreen; and the selected multimedia file is played by the selected digital media renderer.

The invention also provides a digital media controller adapted for a multimedia system architecture, wherein the multimedia system architecture includes a network, a plurality of digital media servers and a plurality of digital media renderers, and each of the digital media server stores a plurality of multimedia file, and the digital media controller is connected with the digital media servers and the digital media renderers via the network, the digital media controller comprising: a touchscreen, a storage device and a central processing unit. The touchscreen is for displaying a server list listing the digital media servers in the multimedia system architecture and listing the multimedia files stored in at least one of the digital media servers, and sensing a first input action at an input position of the touchscreen to select one of the multimedia files corresponding to the input position and stored in one of the digital media servers listed in the server list. The storage device is for storing a computer-accessible program. The central processing unit is for executing a plurality of instructions readable and writeable by a computer, wherein the instructions include: analyzing the first input action. When the first input action is a tap action, the selected multimedia file is played by the digital media renderer that is already connected with the digital media server corresponding to the selected multimedia file. When the first input action is a long press action, a renderer list is displayed on the touchscreen to list the digital media renderer in the multimedia system architecture; selecting one of the digital media renderer by sensing a second input action through the touchscreen. The selected digital media renderer is designated to play the selected multimedia file.

The invention further provides a system for managing multimedia files adapted for a multimedia system architecture, wherein the multimedia system architecture includes a network, a plurality of digital media servers and a plurality of digital media renderers, and each of the digital media server stores a plurality of multimedia file, and the system for managing multimedia files is connected with the digital media servers and the digital media renderers via the network, the system for managing multimedia files comprising: a display unit, a sensing unit, an action analyzing unit, and a control unit. The display unit is for displaying a server list listing the digital media servers in the multimedia system architecture and listing the multimedia files stored in at least one of the digital media servers. The sensing unit is coupled with the display unit, wherein a first input action is sensed at an input position of the sensing unit to select one of the multimedia files corresponding to the input position and stored in one of the digital media servers listed in the server list. The action analyzing unit is coupled with the sensing unit, wherein the action analyzing unit analyzes the first input action. The control unit is coupled with the action analyzing unit, wherein when the first input action is a tap action, the control unit designates the digital media renderer that is already connected with the digital media server corresponding to the selected multimedia file to play the selected multimedia file, when the first input action is a long press action, the control unit controls the display unit to display a renderer list to list the digital media renderers in the multimedia system architecture, the sensing unit senses a second input action on the sensing unit to select one of the digital media renderers, and the control unit designates the selected digital media renderer to play the selected multimedia file according to the second input action.

In one embodiment of the invention, the second input action is a drag action, and the drag action comprises a start position and an end position on the touchscreen, the start position corresponding to the selected multimedia file, and the end position corresponding to the selected digital media renderer.

In one embodiment of the invention, the second input action is another tap action on a display position corresponding to the selected digital media renderer.

In one embodiment of the invention, the long press action is a continuous contact of an input tool with the touchscreen exceeding a predetermined touch time.

In one embodiment of the invention, the digital media controller includes a tablet computer, a smartphone or a personal digital assistance.

Based on the above, in the method for managing multimedia files, the digital media controller, and the system for managing multimedia files according to the invention, a corresponding response is generated automatically according to the action of the user performed on the touchscreen to select the multimedia file to be played. The response including playing the selected multimedia file on the digital media renderer that is already connected to the digital media server, or select another digital media renderer to play the multimedia file. The user can quickly operate and manage the connections between the digital media servers and the digital media renderers, and designate the digital media renderer to play a specific multimedia file of the multimedia server, more intuitively on the multimedia file management interface provided by the digital media controller/system for managing multimedia files. Therefore, the complexity of one-to-multiple multimedia file management in the DLNA environment can be reduced, and the convenience of the user operation can be enhanced.

The invention will become more fully understood from the detailed description below and accompanying drawings, which are given for illustration only, and thus are not limitative of the present invention.

### BRIEF DESCRIPTION OF THE DRAWINGS

FIG. 1 is a schematic diagram showing a multimedia system architecture that is capable of performing a multimedia files management in a one-to-multiple manner according to an embodiment of the invention.

FIG. 2 is a flowchart showing a method for managing multimedia files according to an embodiment of the invention.

FIG. 3A is a schematic diagram showing a multimedia file management interface displayed on the touchscreen of a digital media controller according to an embodiment of the invention.

FIG. 3B is a schematic diagram showing a multimedia file management interface shown on the touchscreen of a digital media controller according to another embodiment of the invention.

FIG. 3C is a schematic diagram showing a multimedia file management interface displayed by the touchscreen of the digital media controller according to another embodiment of the invention.

FIG. 3D is a schematic diagram showing the multimedia file management interface displayed on the touchscreen of the digital media controller according to still another embodiment of the invention.

FIG. 4 is a schematic diagram showing a system for managing multimedia files according to an embodiment of the invention.

FIG. 5 is a schematic diagram showing a digital media controller according to an embodiment of the invention.

### DETAILED DESCRIPTION OF THE INVENTION

The present invention will be apparent from the following detailed description, which proceeds with reference to the accompanying drawings, wherein the same references relate to the same elements.

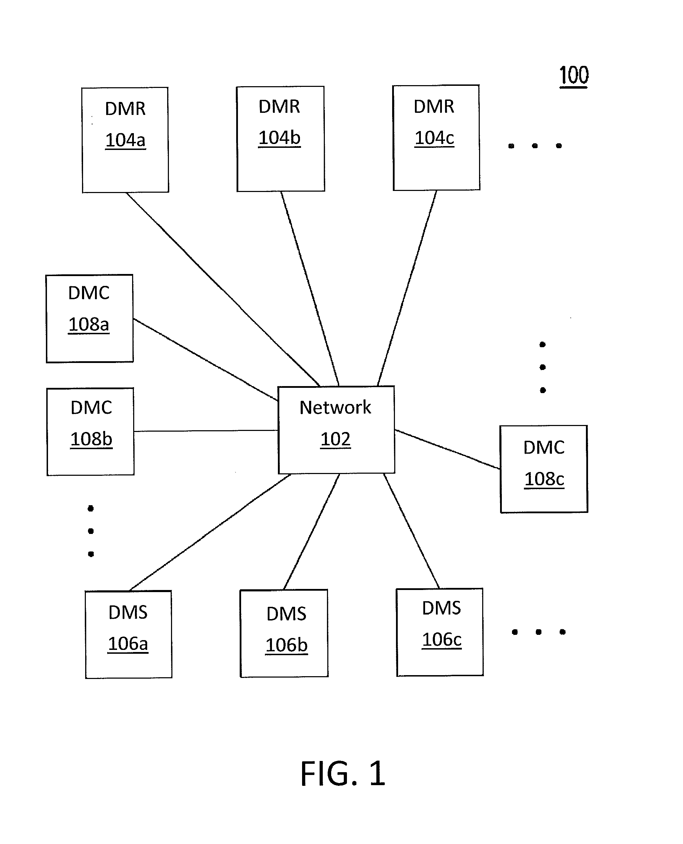

**FIG.**1 is a schematic diagram showing a multimedia system architecture that is capable of performing a one-to-multiple multimedia files management according to an embodiment of the invention. Referring to FIG. 1, the multimedia system architecture 100 includes a network 102, a plurality of digital media renderers (at least including 104a∼104c), a plurality of digital media server (at least including 106a∼106c) and at least one digital media controller (including 108a∼108c). Each of the digital media servers 106a∼106c stores a plurality of multimedia files, and the digital media controllers 108a∼108c are connected to the digital media servers 106a∼106c respectively via the network 102. Moreover, the network 102 may be connected with the digital media renderers 104a∼104c, the digital media servers 106a∼106c and the digital media controllers 108a∼108c wirelessly or wiredly. Furthermore, the network 102 is, for example, an Ethernet network, a network complaint to the IEEE 13941 standard, IEEE 802.11-based wireless network, or a combination of the network above.

The digital media servers mentioned above may be hardware equipment such as DLNA-complaint personal computers, network storage medium, digital recorders or portable electronic devices (including notebook computers, mobile phones, personal digital assistances, digital video cameras and digital cameras) that can provide DLNA video and/or audio server functionalities. The digital media renderers mentioned above may be hardware equipment such as DLAN-complaint televisions, stereo sound systems, personal computers or portable electronic devices (including notebook computers, mobile phones, personal digital assistances, digital video cameras or digital cameras) that can provide DLNA video and/or audio renderer functionalities. Moreover, the multimedia files mentioned above may be, for example, image files, audio files or photo files. The digital media controllers mentioned above may be portable electronic devices with touchscreens, such as DLNA-complaint tablet PCs, smartphones or personal digital assistances.

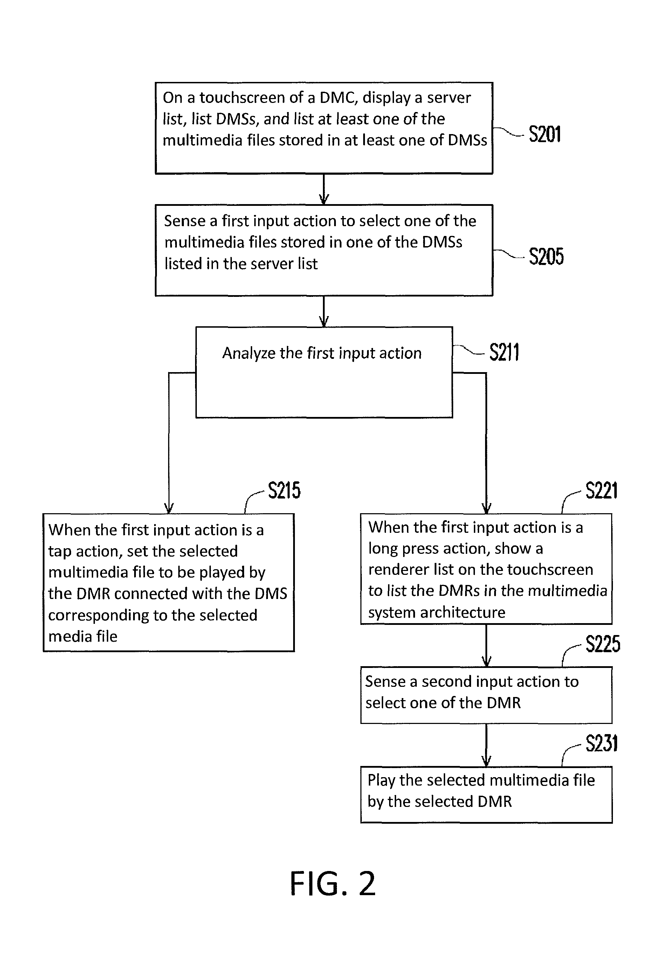

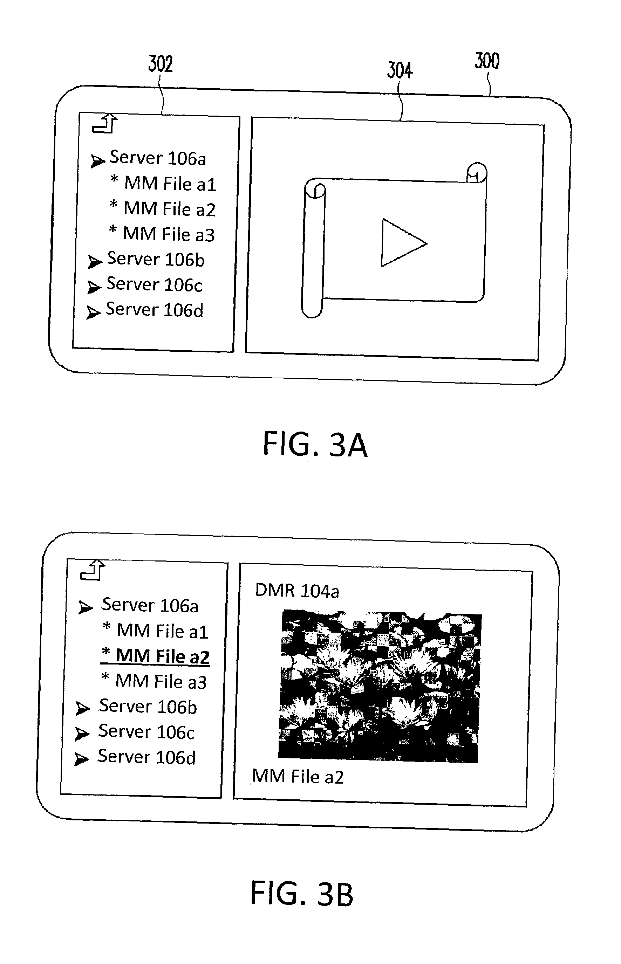

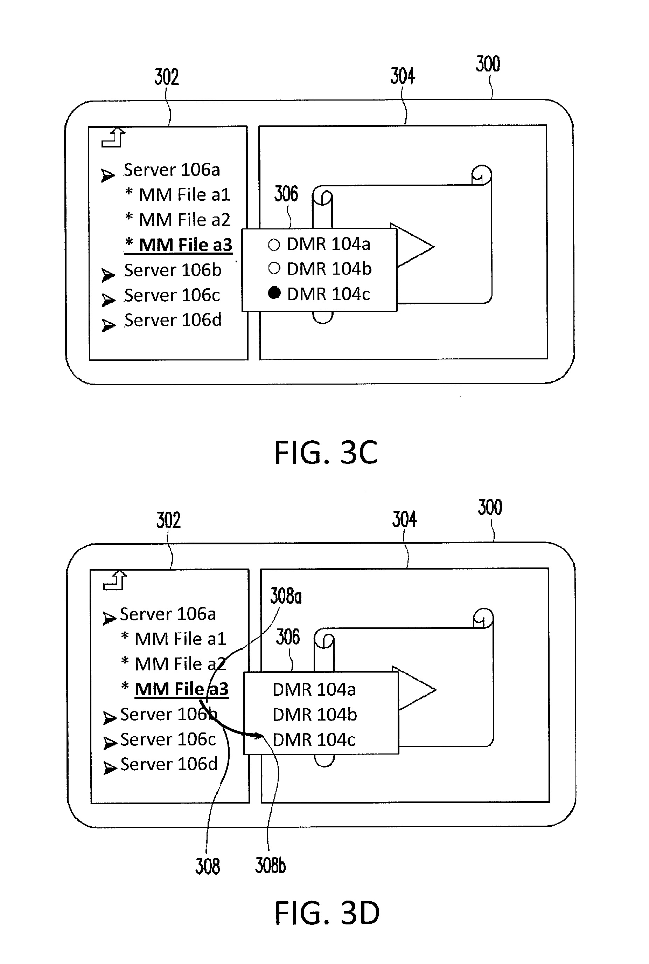

FIG. 2 is a flowchart showing a method for managing multimedia files according to an embodiment of the invention. FIG. 3A is a schematic diagram showing a multimedia file management interface displayed on the touchscreen of a digital media controller according to an embodiment of the invention. Referring to FIG. 1, 2 and 3A, in the method for managing multimedia files in the embodiment, a server list 302 is displayed on a touchscreen of one of the digital media controllers (108a∼108c), and the multimedia files al∼a3 stored in one of the multimedia servers (106a∼106c) are also listed (step S201). Referring to FIG. 3, the multimedia file management interface 300 shows a server list 302 which lists the digital media servers (106a∼106c) in the multimedia system architecture 100, and the multimedia files al∼a3 stored in the digital media server 106a. In the present embodiment, a user touches the touchscreen of the digital media controller at the position corresponding to the digital media server 106a with an input means (such as a finger or a touch pen) by a tap action, so that the server list further shows the multimedia files stored in the digital media server 106a except for the selectable items of the digital media servers 106a∼106c. In another embodiment, the server list further indicates, beside each digital media server, the digital media renderer connected with each digital media server. Moreover, except for the server list 302, the multimedia file management interface 300 further shows a preview window 304 for the user to preview the selected multimedia file. Moreover, an still another embodiment, the multimedia file management interface 300 further includes a field to show the file information (not shown) of the previewed multimedia file in the preview window 304 to provide the user with further file information.

Subsequently, in step S205, a first input action at the input position on the touchscreen is sensed to select one of the multimedia files stored in one of the digital media servers listed in the server list corresponding to the input position. That is, the user performs the first input action on the touchscreen of the digital media controller with an input means (such as a finger or a touch pen) to select the multimedia file to be played.

Subsequently, in step S211, the first input action is analyzed. In step S215, when the first input action is a tap action (i.e. a down action followed by an up action), the selected multimedia file is set to be played by the digital media renderer connected with the digital media server corresponding to the selected media file, or by the digital media renderer that has been selected. If the connection between the digital media server corresponding to the selected multimedia file and the selected digital media renderer is not established, the connection is established immediately. FIG. 3B is a schematic diagram showing a multimedia file management interface shown on the touchscreen of a digital media controller according to another embodiment of the invention. Referring to FIG. 3B, in the present embodiment, with the multimedia file a2 stored in the digital media server 106a being selected to be played and the digital media server 106a being connected with the renderer 104a as an example, when the first input action sensed is a tap action, the multimedia file a2 corresponding to the input position (i.e., the multimedia file a2 selected by the user using the first input action) is set to be played by the renderer 104a that is already connected with the digital media server 106a. Therefore, the multimedia file a2 to be played on the renderer 104a can be previewed in the preview window 304 of the multimedia file management interface 300.

In the present embodiment, after the user selected on the touchscreen the multimedia file to be played by the tap action, if the digital media render is playing another multimedia file, the selected multimedia file is added into the play list of the digital media renderer as the way of setting the multimedia file to be played by the digital media renderer. With this arrangement, the digital media renderer will not play the selected multimedia file immediately, but play it after finishing playing other multimedia files in the play list.

Furthermore, in step S221, when the first input action is a long press action, a renderer list is shown on the touchscreen to list the digital media renderers in the multimedia system architecture 100. The long press action mentioned above may be, for example, an action of continuously contacting the touchscreen by an input tool (such as a finger or a touch pen) for more than a predetermined touch time. This predetermined time may be for example a default time or a time set by the user.

FIG. 3C is a schematic diagram showing a multimedia file management interface displayed by the touchscreen of the digital media controller according to another embodiment of the invention. Referring to FIG. 3C, in the present embodiment, the user's selection of playing the multimedia file a3 stored in the digital media server 106a by a first action is used as an example. When the sensed first input action is a long press action, a floating-type renderer list is displayed in the multimedia file management interface 300. This floating-type renderer list 306 may be, for example, provided partially overlapped with the server list 302 and beside the multimedia file a3 selected by the user by the first input action. In the present embodiment, the renderer list is displayed in a floating type in the multimedia file management interface 300. However, the invention is not limited herein. That is, in another embodiment, the renderer list may be displayed directly below the multimedia file selected by the user with the first input action in the server list. In other words, the display position and type of the renderer list may be varied in view of the application interface actually developed, and is not limited to the example above.

Afterwards, in step S225, a second input action is sensed by the touchscreen to select one of the digital media renderer. Referring to FIG. 3C, the second input action is, for example, a tap action (that is, a down action followed by an up action) at the display position corresponding to the selected digital media renderer 104c. In the present embodiment, the renderer list lists the digital media renderers 104a-104c in the multimedia system architecture 100 by the way of selection dialogues. However, the invention is not limited thereto. That is, the digital media renderers 104a-104c in the renderer list can be listed in other ways. Moreover, in the present embodiment, a tap action is used as an example of the second input action to explain the process of playing the multimedia file by the digital media renderer selected from the renderer list. However, the invention is not limited thereto.

FIG. 3D is a schematic diagram showing the multimedia file management interface displayed on the touchscreen of the digital media controller according to still another embodiment of the invention. Referring to FIG. 3D, similar to the embodiment shown in FIG. 3C, in the present embodiment the first action is used to select the multimedia file a3 stored in the digital media server 106a to play. However, the difference is that in the embodiment shown in FIG. 3D, the second action is, for example, a drag action 308, and the drag action 308 includes a start position 308a and an end position 308b on the touchscreen. The start position 308a corresponds to the selected multimedia file a3, and can correspond to the position pressed by the first input action. The end position 308b corresponds to the selected digital renderer 104c. That is, the user can use an intuitive way to drag the multimedia file a3 to be played to the renderer 104c in the renderer list.

Afterwards, in step S231, the selected multimedia file is set to be played by the selected digital media renderer. As for the embodiments shown in FIG. 3C and FIG. 3D, it means to have the renderer 104c play the multimedia file a3. If the selected digital media renderer is playing another multimedia file, this selected multimedia file can be added to the play list of the selected digital media renderer. With this arrangement, the selected digital media renderer will not play the multimedia file immediately, but, for example, plays the selected multimedia file after finished playing other multimedia files in the play list.

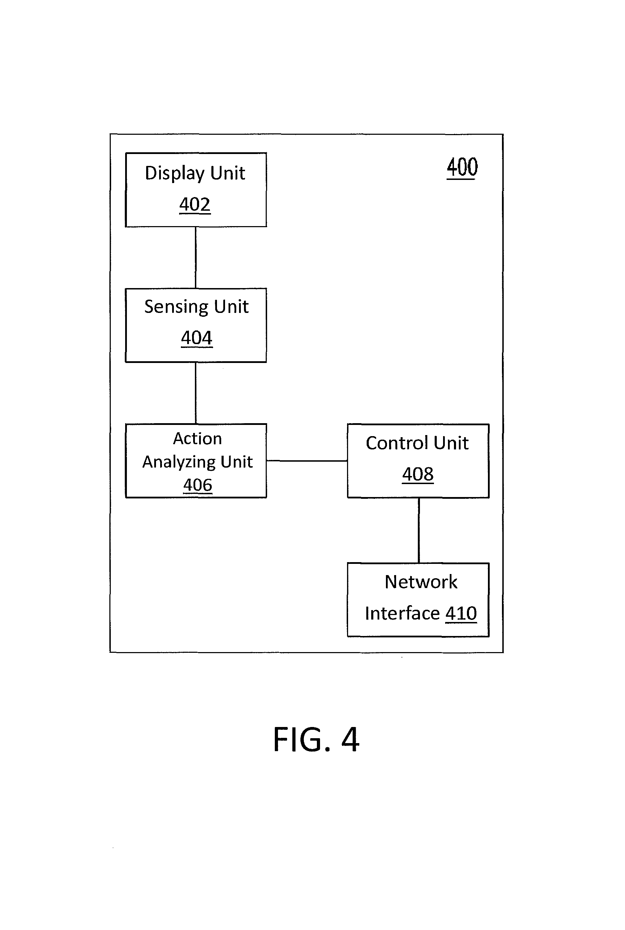

FIG. 4 is a schematic diagram showing a system for managing multimedia files according to an embodiment of the invention. Referring to FIG. 4 and FIG. 1, the system for managing multimedia files 400 according to the present embodiment is suitable for the multimedia system architecture 100. The system for managing multimedia files 400 includes a display unit 402, a sensing unit 404, an action analyzing unit 406 and a control unit 408. The display unit 402, the sensing unit 404, the action analyzing unit 406 and the control unit 408 can realize the method for managing multimedia files described in the embodiments described above. The display unit 402 displays a server list (such as the server list 302 shown in FIG. 3A), lists the digital media servers (106a∼106c) in the multimedia system architecture 100, and lists the multimedia files stored in at least one of the digital media servers (see step S201 of the embodiment described above for details). The sensing unit 404 couples to the display unit 402, and senses the first input action of the user at an input position of the sensing unit to select one of the digital media files stored in one of the digital media servers listed in the server list corresponding to the first position (see step S205 of the embodiment described above for details). The action analyzing unit 406 couples to the sensing unit 404 and analyzes the first input action (see step S211 of the embodiment described above for details). The control unit 408 couples to the action analyzing unit 406. When the first input action is a tap action, the control unit 408 designates the digital media renderer connected to the digital media server corresponding to the selected multimedia file to play the selected multimedia file by the network interface 410 of the system for managing multimedia files 400 through the network 102 (as shown in FIG. 1) (see step S215 of the embodiment described above for details). On the other hand, when the first input action is a long press action, the control unit 408 controls the display unit 402 to display the renderer list to list the digital media renderers in the multimedia system architecture 100 (see the step S221 of the embodiment described above). The sensing unit 404 senses the second input action on the sensing unit 404 to select one of the digital media renderer (see step S225 of the embodiment described above for details). The control unit 408 connects to the selected digital media renderer with network interface 410 via the network 102 to designate the selected digital media renderer to play the selected multimedia file (see step S231 of the embodiment described above).

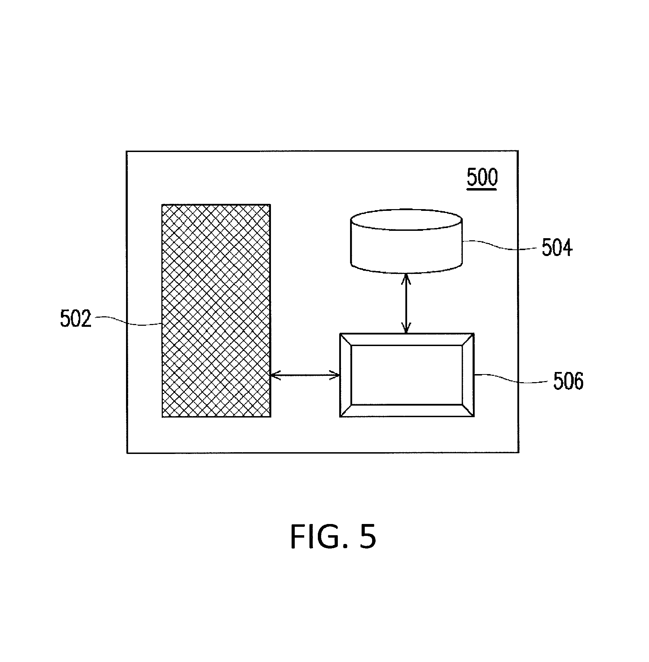

Moreover, the method for managing multimedia files and the system for managing multimedia files in the embodiments above may also be implemented by executing a computer-accessible program on the digital media controller. FIG. 5 is a schematic diagram showing a digital media controller according to an embodiment of the invention. Referring to FIG. 5, in the present embodiment, the digital media controller 500 includes a touchscreen 502, a storage device 504 and a central processing unit 506. The touchscreen displays the server list listing the digital media servers in the multimedia system architecture 100 (as shown in FIG. 1) and the multimedia files stored in at least one of the digital media servers (see the step S201 in the embodiment described above for details). The touchscreen also senses the first input action at an input position of the touchscreen to select one of the multimedia files stored in one of the digital media servers listed in the server list and corresponds to the input position (see the step S205 in the embodiment described above). The storage device 504 stores a computer-accessible program. The central processing unit 506 executes a plurality of computer-readable and writable instructions. These instructions include: analyzing the first input action (see the step S211 in the embodiment described above for details). When the first input action is a tap action, the digital media renderer connected to the digital media server corresponding to the selected multimedia file is designated to play the selected multimedia file (see the step S215 in the embodiment described above for details). When the first input action is a long press action, a renderer list is displayed on the touchscreen (see the step S221 in the embodiment described above for details), and then a second input action is sensed via the touchscreen to select one of the digital media renderer (see the step S225 in the embodiment described above for details). The selected digital media renderer is then designated to play the selected multimedia file (see the step S231 in the embodiment described above for details). The steps of the method for managing multimedia files and the functions of the system for managing multimedia files have been described in detail in the embodiments above; therefore they are omitted here for concise purpose.

In one embodiment of the invention, the digital media controller is a tablet having a touchscreen, and establishes connections with the digital media servers and the digital media renderers via a wireless network. When the user keeps pressing a file in the multimedia file list, the present embodiment generates a digital media renderer list in real time, and allows the user to select a digital media renderer to play the multimedia file with a continuous press-drag action. Such design, when viewed as a whole, allows the user to control the playback status of the digital media files on several digital media renderers more intuitively with the portable electronic device at any place within the range of the wireless network. This improves the convenience of the user significantly.

To sum up, in the present invention, a corresponding response is generated automatically according to the action of the user performed on the touchscreen to select the multimedia file to be played. The response including playing the selected multimedia file on the digital media renderer that is already connected to the digital media server, or select another digital media renderer to play the multimedia file. The user can quickly operate and manage the connections between the digital media servers and the digital media renderers, and designate the digital media renderer to play a specific multimedia file of the multimedia server, more intuitively on the multimedia file management interface provided by the digital media controller/system for managing multimedia files. Therefore, the complexity of one-to-multiple multimedia file management in the DLNA environment can be reduced, and the convenience of the user operation can be enhanced.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A method for managing multimedia files adapted for a multimedia system architecture, wherein the multimedia system architecture includes a network, at least one digital media controller, a plurality of digital media servers and a plurality of digital media renderers, and each of the digital media servers stores a plurality of multimedia files, and the digital media controller is connected with the digital media servers and the digital media renderers via the network, the method comprising:
displaying a server list on a touchscreen of the digital media controller to list the digital media servers in the multimedia system architecture, and to list the multimedia files stored in at least one of the digital media servers;
sensing a first input action at an input position of the touchscreen to select one of the multimedia files corresponding to the input position and stored in one of the digital media servers listed in the server list;
analyzing the first input action;
when the first input action is a tap action, playing the selected multimedia file by the digital media renderer that is already connected with the digital media server corresponding to the selected multimedia file;
when the first input action is a long press action,
displaying a renderer list on the touchscreen to list the digital media renderer in the multimedia system architecture;
selecting one of the digital media renderer by sensing a second input action through the touchscreen; and
playing the selected multimedia file by the selected digital media renderer.

2. The method for managing multimedia files according to claim 1, wherein the second input action is a drag action, the drag action comprises a start position and an end position on the touchscreen, the start position corresponds to the selected multimedia file, and the end position corresponds to the selected digital media renderer.

3. The method for managing multimedia files according to claim 1, wherein the second input action is another tap action on a display position corresponding to the selected digital media renderer.

4. The method for managing multimedia files according to claim 1, wherein the long press action is a continuous contact of an input tool with the touchscreen exceeding a predetermined touch time.

5. The method for managing multimedia files according to claim 1, wherein the digital media controller includes a tablet computer, a smartphone or a personal digital assistance.

6. A digital media controller adapted for a multimedia system architecture, wherein the multimedia system architecture includes a network, a plurality of digital media servers and a plurality of digital media renderers, and each of the digital media server stores a plurality of multimedia file, and the digital media controller is connected with the digital media servers and the digital media renderers via the network, the digital media controller comprising:
a touchscreen for displaying a server list listing the digital media servers in the multimedia system architecture and listing the multimedia files stored in at least one of the digital media servers, and sensing a first input action at an input position of the touchscreen to select one of the multimedia files corresponding to the input position and stored in one of the digital media servers listed in the server list;
a storage device for storing a computer-accessible program;
a central processing unit for executing a plurality of instructions readable and writeable by a computer, wherein the instructions include:
analyzing the first input action;
when the first input action is a tap action, playing the selected multimedia file by the digital media renderer that is already connected with the digital media server corresponding to the selected multimedia file;
when the first input action is a long press action,
displaying a renderer list on the touchscreen to list the digital media renderer in the multimedia system architecture;
selecting one of the digital media renderer by sensing a second input action through the touchscreen; and
designating the selected digital media renderer to play the selected multimedia file.

7. The digital media controller according to claim 6, wherein the second input action is a drag action, the drag action comprises a start position and an end position on the touchscreen, the start position corresponds to the selected multimedia file, and the end position corresponds to the selected digital media renderer.

8. The digital media controller according to claim 6, wherein the second input action is another tap action on a display position corresponding to the selected digital media renderer.

9. The digital media controller according to claim 6, wherein the long press action is a continuous contact of an input tool with the touchscreen exceeding a predetermined touch time.

10. The digital media controller according to claim 6, wherein the digital media controller includes a tablet computer, a smartphone or a personal digital assistance.

11. A system for managing multimedia files adapted for a multimedia system architecture, wherein the multimedia system architecture includes a network, a plurality of digital media servers and a plurality of digital media renderers, and each of the digital media server stores a plurality of multimedia file, and the system for managing multimedia files is connected with the digital media servers and the digital media renderers via the network, the system for managing multimedia files comprising:
a display unit for displaying a server list listing the digital media servers in the multimedia system architecture and listing the multimedia files stored in at least one of the digital media servers;
a sensing unit coupled with the display unit, wherein a first input action is sensed at an input position of the sensing unit to select one of the multimedia files corresponding to the input position and stored in one of the digital media servers listed in the server list;
an action analyzing unit coupled with the sensing unit, wherein the action analyzing unit analyzes the first input action; and
a control unit coupled with the action analyzing unit, wherein when the first input action is a tap action, the control unit designates the digital media renderer that is already connected with the digital media server corresponding to the selected multimedia file to play the selected multimedia file, when the first input action is a long press action, the control unit controls the display unit to display a renderer list to list the digital media renderers in the multimedia system architecture, the sensing unit senses a second input action on the sensing unit to select one of the digital media renderers, and the control unit designates the selected digital media renderer to play the selected multimedia file according to the second input action.

12. The system for managing multimedia files according to claim 11, wherein the second input action is a drag action, the drag action comprises a start position and an end position on the sensing unit, the start position corresponds to the selected multimedia file, and the end position corresponds to the selected digital media renderer.

13. The system for managing multimedia files according to claim 11, wherein the second input action is another tap action on a display position corresponding to the selected digital media renderer.

14. The system for managing multimedia files according to claim 11, wherein the long press action is a continuous contact of an input tool with the sensing unit exceeding a predetermined touch time.

15. A method for managing multimedia files, adapted for a multimedia system architecture, wherein the multimedia system architecture includes a wireless network, a portable digital media controller, a digital media server and a plurality of digital media renderers, the digital media server stores a multimedia file, the digital media controller has a touchscreen and is connected with the digital media server and the digital media renderers via the wireless network, the method comprising:
listing the multimedia file at the touchscreen;
sensing a first input action to select the multimedia file via the touchscreen;
when the first input action is a tap action, setting the selected multimedia file to be played by the digital media renderer that is already selected;
when the first input action is a long press action, displaying a renderer list on the touchscreen to list the digital media renderers, and sensing a second input action via the touchscreen for setting the multimedia file to be played by one of the digital media renderers.
